# EUROPÄISCHE PATENTANMELDUNG

(11) **EP 3 962 014 A1**
(43) Veröffentlichungstag der Anmeldung: **02.03.2022**
(21) Anmeldenummer: 20193912.1
(22) Anmeldetag: 01.09.2020
(51) Int. Cl.: H04L 29/06, H04L 12/26

(54) **ENDE-ZU-ENDE MONITORING EINER DATENKOMMUNIKATION**

(71) Anmelder: Siemens Aktiengesellschaft, 80333 München (DE)
(72) Erfinder: Huth, Hans-Peter, 80638 München (DE); Zirkler, Andreas, 85521 Ottobrunn (DE)

(57) **Zusammenfassung**

Die Erfindung gibt ein System zum Ende-zu-Ende Monitoring einer Datenübertragung in einem Rechnernetz (N) an. Das System weist auf:
- ein Rechnernetz (N),
- mindestens einen Datenpakete sendenden ersten Rechner (S) des Rechnernetzes (N),
- mindestens einen die gesendeten Datenpakte empfangenden zweiten Rechner (R) des Rechnernetzes (N) und
- einen dritten Rechner (A) des Rechnernetzes (N),
dadurch gekennzeichnet, dass
- der erste Rechner (S) eingerichtet ist, für mindestens eines der gesendeten Datenpakete einen ersten Fingerprint (FP1) mit einer zugehörigen Sendeuhrzeit (ST) zu erzeugen und an den dritten Rechner (A) zu übertragen,
- der zweite Rechner (R) eingerichtet ist, für das empfangene gesendete Datenpaket einen zweiten Fingerprint (FP2) mit einer zugehörigen Empfangsuhrzeit (RT) zu erzeugen und an den dritten Rechner (A) zu übertragen, und
- der dritte Rechner (A) eingerichtet ist, gleiche erste und zweite Fingerprints (FP1, FP2) als zu einem gleichen Datenpaket gehörend zu erkennen und aus der Sendeuhrzeit und der Empfangsuhrzeit die Laufzeit (D) des Datenpakets in dem Rechnernetz (N) zu ermitteln.

Ein zugehöriges automatisiertes Verfahren wird ebenfalls angegeben.

## Beschreibung

### GEBIET DER ERFINDUNG

Die Erfindung betrifft ein System und ein automatisiertes Verfahren für ein Ende-zu-Ende Monitoring einer Datenübertragung in einem Rechnernetz, wobei die Laufzeit (= "End-to-End Delay") von Datenpaketen ausgewertet wird.

### HINTERGRUND DER ERFINDUNG

Datenströme zwischen Endgeräten können von einer Vielzahl von Störungen betroffen sein. Monitoring Systeme beobachten Kommunikationsbeziehungen, um die Verbindungseigenschaften zu erfassen. Manche Monitoring Systeme senden eigene Messpakete, andere versuchen durch passives Mitlesen und Erfassen von grundlegenden Kennzahlen (z.B. Sendezeitpunkt, Paketgröße u.a.) Rückschlüsse auf die Verbindungsqualität zu erlauben. Wichtige Kenngrößen der Verbindungsqualität sind die Zeit, die eine Nachricht vom Sender zum Empfänger braucht, das sogenannte "End-to-End Delay" (= Laufzeit), sowie die Paketverluste.

Die Ermittlung dieser Kenngrößen ist durch Versenden eigener Messpakete einfach. Ein Nachteil dieser Lösung ist jedoch, dass zusätzlicher Datenverkehr erzeugt wird, der die Eigenschaften des Netzwerks beeinflusst und damit zu einer Verfälschung der Messergebnisse führen kann. Insbesondere in Netzen, die einzelne Datenflüsse unterschiedlich behandeln, ist es wahrscheinlich, dass die Messpakete anders behandelt werden als die Anwendungspakete und somit ein falsches Ergebnis erzeugt wird.

Würde man versuchen, Messpakete so zu gestalten, dass sie wie Applikationspakete behandelt werden, würde man insbesondere in Netzwerken, in denen Ressourcen für kritische Datenströme reserviert sind, das Netzwerkverhalten nachhaltig stören. Dies ist insbesondere bei TSN (Time-Sensitive Networking) der Fall. TSN ist ein neuer IEEE Ethernet Standard, wird aber in Zukunft auch in 5G Netzen eingesetzt. Die sich in der Standardisierung befindlichen TSN Standards definieren Mechanismen zur Übertragung von Daten über Ethernet-Netze. Ein Großteil der Projekte definiert dabei Erweiterungen des Bridging-Standards IEEE 802.1Q. Diese Erweiterungen adressieren vor allem die Übertragung mit sehr geringer Übertragungslatenz und hoher Verfügbarkeit.

Das Ermitteln der Laufzeit und der Verluste pro Anwendung ist aber durch ein passives Monitoring nicht ohne weiteres möglich. Dabei wird beim Senden und beim Empfangen jedes Datenpaket abgehört. Es ist aber in der Regel nicht ohne weiteres möglich, einem empfangenen Paket das zugehörige Sendeereignis zuzuordnen. Zwar verwenden die meisten Anwendungsprotokolle irgendeine Form von Zykluszähler in den Paketen, aufgrund der Vielzahl, in verschiedenen Standardisierungsgremien und Anwenderorganisationen standardisierten und zusätzlichen proprietären Protokollen müsste ein universell einsetzbares Monitoring Tool eine sehr große und stetig steigende Zahl von Anwendungsprotokollen erkennen und interpretieren können.

Somit sind Messungen der Laufzeit und der Verluste nur mit großem Aufwand möglich. Auch der TSN Standard schreibt keine Methode zur Identifikation einzelner Pakete eines Streams vor, sondern begnügt sich mit der Identifikation der zu einem Stream zugehörigen Pakete. Bei der Verwendung von "Frame Replikation and Elimination for Redundancy" (FRER) ist zwar eine Identifikation der einzelnen Pakete erforderlich, aber schon diese eine Option erlaubt drei verschiedene Tags (R-Tag, HSR sequence TAG oder PRP sequence trailer).

Theoretisch könnten alle beim Sender und beim Empfänger abgehörten Datenpakete an einen dritten Rechner gesendet werden, der die Korrelation durch Vergleich der Pakete wiederherstellen kann. Dies erfordert aber eine hohe zusätzliche Bandbreite, eine erhebliche zusätzliche Rechenleistung und kann Sicherheitsprobleme zur Folge haben.

### ZUSAMMENFASSUNG DER ERFINDUNG

Es ist Aufgabe der Erfindung, eine Lösung anzugeben, um ein einfaches und robustes Ende-zu-Ende Monitoring bei einer Datenkommunikation zu ermöglichen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung gibt ein System an, das aus mindestens einem ersten Rechner, der mindestens eine sendende Anwendung aufweist, einem Rechnernetz sowie mindestens einem zweiten Rechner, der die Daten von dem ersten Rechner empfängt, besteht. Das Rechnernetz kann ganz oder teilweise nach dem TSN Standard ausgeführt sein. Des Weiteren gibt es einen zusätzlichen dritten Rechner, der Monitoringdaten sammeln und verarbeiten kann. Der erste und der zweite Rechner haben eine gleiche, synchrone Uhrzeit, die im Rahmen üblicher Methoden, wie z.B. IEEE 802.1AS-2020 "IEEE Standard for Local and Metropolitan Area Networks--Timing and Synchronization for Time-Sensitive Applications", genau ist.

Auf dem sendenden ersten Rechner und dem empfangenden zweiten Rechner sind beliebige Anwendungen und jeweils ein erster bzw. zweiter (Monitoring)-Agent installiert. Die beiden Monitoringagenten können alle ein- und ausgehenden Datenpakete abhören (= "Sniffen").

In einem weiteren Aspekt der Erfindung werden durch die Monitoringagenten ausgewählte Datenpakete mit Fingerprints und einem Zeitstempel (= Uhrzeit/Zeitpunkt) versehen und in dem dritten Rechner bezüglich der Laufzeiten (= Differenz der Zeitstempel) von korrespondierenden Fingerprints ausgewertet.

Die Erfindung beansprucht ein System zum Ende-zu-Ende Monitoring von Datenpaketen. Das System weist folgende Komponenten auf:
- ein Rechnernetz, das insbesondere nach dem IEEE Time-Sensitive Networking Standard ausgebildet ist,
- mindestens einen Datenpakete sendenden ersten Rechner des Rechnernetzes,
- mindestens einen die Datenpakte empfangenden zweiten Rechner des Rechnernetzes und
- einen dritten Rechner des Rechnernetzes,
   wobei
- der erste Rechner eingerichtet ist, für mindestens eines der gesendeten Datenpakete einen ersten Fingerprint mit einer zugehörigen Sendeuhrzeit zu erzeugen und an den dritten Rechner zu übertragen,
- der zweite Rechner eingerichtet ist, aus dem empfangenen gesendeten Datenpaket einen zweiten Fingerprint mit einer zugehörigen Empfangsuhrzeit zu erzeugen und an den dritten Rechner zu übertragen, und
- der dritte Rechner eingerichtet ist, gleiche erste und zweite Fingerprints als zu einem gleichen Datenpaket gehörend zu erkennen und aus der Sendeuhrzeit und der Empfangsuhrzeit die Laufzeit des Datenpakets in dem Rechnernetz zu ermitteln.

Die Erfindung bietet den Vorteil, dass ein sicheres und robustes Ende-zu-Ende Monitoring durch die Ermittlung der Laufzeit von Datenpaketen mittels Fingerprinting ermöglicht wird.

Bevorzugt wird der Fingerprint als Hash durch eine Hashfunktion gebildet.

Eine Hashfunktion ist eine Abbildung, die eine große Eingabemenge, z.B. ein Datenpaket, auf eine kleinere Zielmenge (die Hashwerte) abbildet. Eine Hashfunktion ist daher im Allgemeinen nicht injektiv. Die Eingabemenge kann Elemente unterschiedlicher Längen enthalten, die Elemente der Zielmenge haben dagegen meist eine feste Länge. Hashfunktionen werden typischerweise angewendet, um einen Inhalt nahezu eindeutig (aber immer noch "kurz") zu identifizieren, ohne etwas über den Inhalt zu verraten.

In einer Weiterbildung kann der erste Rechner eingerichtet sein, aus jedem Xten Datenpaket den ersten bzw. den zweiten Fingerprint zu erzeugen, wobei X eine vorgegebene natürliche Zahl größer eins ist. Dadurch wird die Anzahl der zu überwachenden Datenpakete deutlich reduziert und die Belastung des Rechnernetzes verringert.

In einer weiteren Ausgestaltung kann der erste Rechner eingerichtet sein, aus Y Datenpaketen je Zeiteinheit, z.B. je Minute, den ersten Fingerprint zu erzeugen, wobei Y eine vorgegebene natürliche Zahl größer eins ist. Auch dadurch wird die Anzahl der zu überwachenden Datenpakete deutlich reduziert und die Belastung des Rechnernetzes verringert.

In einer weiteren Ausführungsform ist ein erster Agent in dem ersten Rechner eingerichtet, wobei der erste Agent eingerichtet ist, den ersten Fingerprint mit der zugehörigen Sendeuhrzeit zu erstellen.

In einer weiteren Ausführungsform ist ein zweiter Agent in dem zweiten Rechner eingerichtet, wobei der zweite Agent eingerichtet ist, den zweiten Fingerprint mit der zugehörigen Empfangsuhrzeit zu erstellen.

In einer weiteren Ausgestaltung kann der dritte Rechner eingerichtet sein, wenn die Laufzeit einen vorgegeben Schwellwert überschreitet, ein Warnsignal zu erzeugen und auszugeben.

Die Erfindung beansprucht auch ein automatisiertes Verfahren zum Ende-zu-Ende Monitoring einer Datenübertragung in einem Rechnernetz, wobei:
- ein erster Rechner des Rechnernetzes für mindestens ein gesendetes Datenpaket einen ersten Fingerprint mit einem zugehörigen Sendezeitpunkt erzeugt und an einen dritten Rechner des Rechnernetzes überträgt,
- ein zweiter Rechner für das empfangene gesendete Datenpaket einen zweiten Fingerprint mit einem zugehörigen Empfangszeitpunkt erzeugt und an den dritten Rechner überträgt und
- der dritte Rechner den ersten und zweiten Fingerprint als zu einem selben Datenpaket gehörend erkennt und aus dem Sendezeitpunkt und dem Empfangszeitpunkt die Laufzeit des Datenpakets in dem Rechnernetz ermittelt.

In einer Weiterbildung erzeugt der erste Rechner aus jedem Xten Datenpaket den ersten Fingerprint, wobei X eine vorgegebene natürliche Zahl größer eins ist.

In einer anderen Ausprägung erzeugen der erste Rechner aus Y korrespondierenden Datenpaketen je vorgegebener Zeiteinheit den ersten Fingerprint, wobei Y eine vorgegeben natürliche Zahl größer eins ist.

In einer weiteren Ausgestaltung kann der dritte Rechner, wenn die Laufzeit einen vorgegeben Schwellwert überschreitet, ein Warnsignal erzeugen und ausgeben.

Weitere Besonderheiten und Vorteile der Erfindung werden aus den nachfolgenden Erläuterungen eines Ausführungsbeispiels anhand schematischer Zeichnungen ersichtlich.

### KURZE BESCHREIBUNG DER ZEICHNUNGEN

Die Zeichnungen zeigen:
FIG. 1 ein Blockschaltbild eines Systems zur Überwachung und
FIG. 2 ein Ablaufdiagramm eines Verfahrens zur Überwachung.

### DETAILLIERTE BESCHREIBUNG DER ERFINDUNG

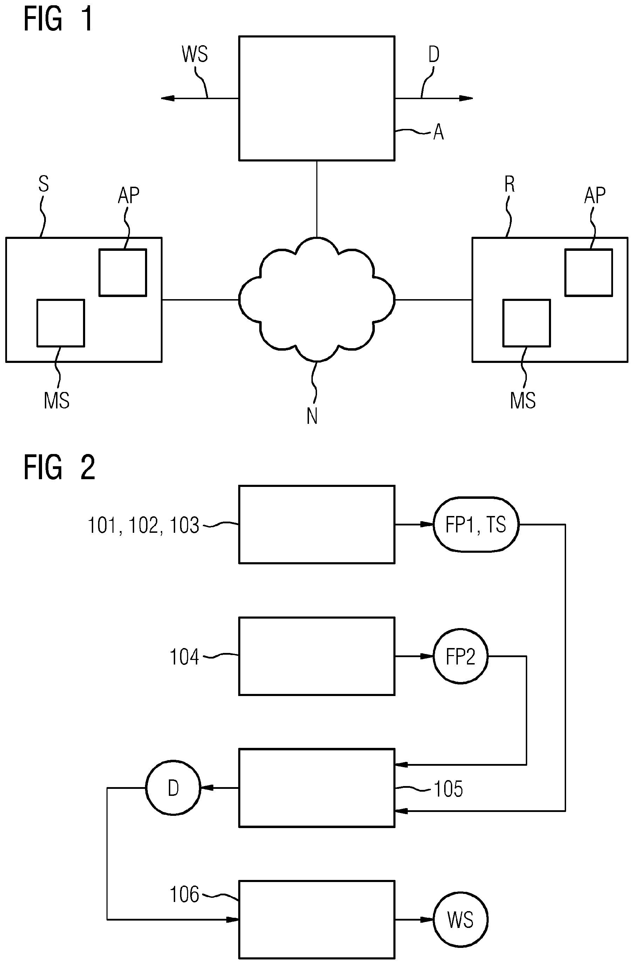

FIG. 1 zeigt ein Blockschaltbild eines Systems zur Überwachung eines Rechnernetzes N. Das System zeigt einem ersten Rechner S, der mindestens eine sendende Anwendung AP aufweist, das Rechnernetz N sowie mindestens einen zweiten Rechner R, der die Datenpakete von dem ersten Rechner S empfängt. Das Rechnernetz N kann ganz oder teilweise nach dem TSN Standard ausgeführt sein.

Des Weiteren gibt es einen dritten Rechner A, der Monitoringdaten sammeln, verarbeiten und analysieren kann. Die Rechner R und S haben eine gleiche, synchrone Uhrzeit, die im Rahmen üblicher Methoden, wie z.B. IEEE 802.1AS-2020 "IEEE Standard for Local and Metropolitan Area Networks-Timing and Synchronization for Time-Sensitive Applications", genau ist.

Auf dem System nach FIG. 1 wird das automatisierte Verfahren mit den folgenden in großen Teilen parallel ablaufenden Schritten gemäß FIG. 2 durchgeführt.

Erster Schritt 101; ein erster Agent MS auf dem sendenden ersten Rechner S erfasst alle gesendeten Datenpakete.

Zweiter Schritt 102; der erste Agent MS erzeugt einen ersten Fingerprint FP1 des Datenpakets aus dem ersten Schritt 101. Ein Fingerprint ist ein künstlich erzeugtes Merkmal, das eindeutig - oder mit sehr hoher Wahrscheinlichkeit eindeutig - für das Datenpaket ist. Ein Beispiel wäre ein sogenannter Hash (https://en.wikipedia.org/wiki/Hash_function). Andere Verfahren sind möglich. Der Fingerprint wird derart konstruiert, dass er deutlich kürzer als das Datenpaket ist.

Dritter Schritt 103; der erste Agent MS sendet den ersten Fingerprint FP1 zusammen mit der Sendeuhrzeit ST an den dritten Rechner A. Das Versenden verwendet eigene TSN Streams oder eine niedrigere Priorität, um Rückwirkungen zu den zu beobachteten Datenströmen zu vermeiden.

Vierter Schritt 104; empfängerseitig hört der zweite Agent MR des zweiten Rechners R mit und erzeugt ebenfalls für jedes oder bestimmte empfangene Datenpakete einen zweiten Fingerprint FP2 nach dem exakt gleichen Verfahren wie auf der Sendeseite (= erster Rechner S). Auch die zweiten Fingerprints FP2 werden inklusive der Empfangsuhrzeit RT (auch als Zeitstempel bezeichenbar) an den dritten Rechner A verschickt.

Fünfter Schritt 105; der dritte Rechner A versucht nun, für jeden ersten Fingerprint FP1 eines versendeten Datenpakets den gleichen zweiten Fingerprint FP2 der Empfangsseite (= zweiter Rechner MR) zu finden und berechnet aus der Differenz der Sendeuhrzeit ST und der Empfangsuhrzeit RT, also aus den beiden Zeitstempeln, die Laufzeit D (= Zeitverzögerung des Datenpakets).

Sechster Schritt 106; die Laufzeit D wird ausgegeben und bei Überschreiten eines Schwellwerts kann ein Warnsignal WS abgegeben werden.

Das Verfahren kann auch, um die Netz- und Rechenlast zu reduzieren, nur einen Teil der versendeten Datenpakete an den dritten Rechner A melden, z.B. jedes tausendste Paket oder fünfmal pro Sekunde.

Alternativ kann das Verfahren automatisch solche Verkehrsklassen erkennen, bei denen eine präzise Bestimmung der Qualitätseigenschaften typischerweise erforderlich ist, z.B. Daten, die in einem regelmäßigen Zyklus gesendet werden und sich auf diese Verkehrsklassen fokussieren.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- A: dritter Rechner
- AP: Applikation
- D: Laufzeit
- FP1: erster Fingerprint
- FP2: Zweiter Fingerprint
- MR: zweiter Agent
- MS: erster Agent
- N: Rechnernetz
- R: zweiter Rechner
- RT: Empfangsuhrzeit
- S: erster Rechner
- ST: Sendeuhrzeit
- WS: Warnsignal

- 101: Erster Schritt
- 102: Zweiter Schritt
- 103: Dritter Schritt
- 104: Vierter Schritt
- 105: Fünfter Schritt
- 106: Sechster Schritt

## Patentansprüche

1. System, aufweisend:
- ein Rechnernetz (N),
- mindestens einen Datenpakete sendenden ersten Rechner (S) des Rechnernetzes (N),
- mindestens einen die gesendeten Datenpakte empfangenden zweiten Rechner (R) des Rechnernetzes (N) und
- einen dritten Rechner (A) des Rechnernetzes (N),
**dadurch gekennzeichnet, dass**
- der erste Rechner (S) eingerichtet ist, für mindestens eines der gesendeten Datenpakete einen ersten Fingerprint (FP1) mit einer zugehörigen Sendeuhrzeit (ST) zu erzeugen und an den dritten Rechner (A) zu übertragen,
- der zweite Rechner (R) eingerichtet ist, für das empfangene gesendete Datenpaket einen zweiten Fingerprint (FP2) mit einer zugehörigen Empfangsuhrzeit (RT) zu erzeugen und an den dritten Rechner (A) zu übertragen, und
- der dritte Rechner (A) eingerichtet ist, gleiche erste und zweite Fingerprints (FP1, FP2) als zu einem gleichen Datenpaket gehörend zu erkennen und aus der Sendeuhrzeit und der Empfangsuhrzeit die Laufzeit (D) des Datenpakets in dem Rechnernetz (N) zu ermitteln.

2. System nach Anspruch 1,
**dadurch gekennzeichnet,**
**dass** das Rechnernetz (N) nach dem IEEE Time-Sensitive Networking Standard ausgebildet ist.

3. System nach Anspruch 1 oder 2,
**dadurch gekennzeichnet,**
**dass** der erste und der zweite Fingerprint (FP1, FP2) als Hash durch eine Hashfunktion erzeugbar sind.

4. System nach einem der vorhergehenden Ansprüche,
**dadurch gekennzeichnet,**
**dass** der erste Rechner (S) eingerichtet ist, aus jedem Xten Datenpaket den ersten Fingerprint (FP1) zu erzeugen, wobei X eine vorgegebene natürliche Zahl größer eins ist.

5. System nach einem der Ansprüche 1 bis 3,
**dadurch gekennzeichnet,**
**dass** der erste Rechner (S) eingerichtet ist, aus Y Datenpaketen je vorgegebener Zeiteinheit den ersten Fingerprint (FP1) zu erzeugen, wobei Y eine vorgegebene natürliche Zahl größer eins ist.

6. System nach einem der vorhergehenden Ansprüche, **gekennzeichnet durch**:
- einen ersten Agenten (MS) des ersten Rechners (S), wobei der erste Agent (MS) eingerichtet ist, den ersten Fingerprint (FP1) mit der zugehörigen Sendeuhrzeit (TS) zu erzeugen.

7. System nach einem der vorhergehenden Ansprüche, **gekennzeichnet durch**:
- einen zweiten Agenten (MR) des zweiten Rechners (R), wobei der zweite Agent (MR) eingerichtet ist, den zweiten Fingerprint (FP2) mit der zugehörigen Empfangsuhrzeit zu erstellen.

8. System nach einem der vorhergehenden Ansprüche,
wobei der dritte Rechner (A) eingerichtet ist, wenn die Laufzeit einen vorgegeben Schwellwert überschreitet, ein Warnsignal (WS) zu erzeugen und auszugeben.

9. Automatisiertes Verfahren zum Ende-zu-Ende Monitoring einer Datenübertragung in einem Rechnernetz (N), wobei:
- ein erster Rechner (S) des Rechnernetzes (N) für mindestens ein gesendetes Datenpaket einen ersten Fingerprint (FP1) mit einer zugehörigen Sendeuhrzeit (TS) erzeugt (102) und an einen dritten Rechner (A) des Rechnernetzes (N) überträgt (103),
- ein zweiter Rechner (R) für das empfangene gesendete Datenpaket einen zweiten Fingerprint (FP2) mit einer zugehörigen Empfangsuhrzeit (TR) erzeugt und an den dritten Rechner überträgt (104) und
- der dritte Rechner (A) den ersten und zweiten Fingerprint (FP1, FP2) als zu einem selben Datenpaket gehörend erkennt und aus der Sendeuhrzeit (TS) und der Empfangsuhrzeit (TR) die Laufzeit (D) des Datenpakets in dem Rechnernetz ermittelt (105).

10. Automatisiertes Verfahren nach Anspruch 9,
**dadurch gekennzeichnet,**
**dass** der erste und der zweite Fingerprint (FP1, FP2) als Hash durch eine Hashfunktion erzeugt werden.

11. Automatisiertes Verfahren nach Anspruch 9 oder 10 **dadurch gekennzeichnet,**
**dass** der erste Rechner (S) aus jedem Xten Datenpaket den ersten Fingerprint (FP1) erzeugt, wobei X eine vorgegeben natürliche Zahl größer eins ist.

12. Automatisiertes Verfahren nach Anspruch 9 oder 10, **dadurch gekennzeichnet,**
**dass** der erste Rechner (S) aus Y Datenpaketen je vorgegebener Zeiteinheit den ersten Fingerprint (FP1) erzeugt, wobei Y eine vorgegeben natürliche Zahl größer eins ist.

13. Automatisiertes Verfahren nach einem der Ansprüche 9 bis 12,
**dadurch gekennzeichnet,**
**dass** der dritte Rechner (A), wenn die Laufzeit (D) einen vorgegeben Schwellwert überschreitet, ein Warnsignal (WS) erzeugt und ausgibt (106).
